# EUROPEAN PATENT SPECIFICATION

(11) **EP 4 553 643 B1**
(45) Date of publication and mention of the grant of the patent: **03.06.2026**
(21) Application number: 24191984.4
(22) Date of filing: 31.07.2024
(51) Int. Cl.: G06F 7/58

(54) **SPIN-ORBIT TORQUE-BASED RANDOM NUMBER GENERATOR AND FABRICATING METHOD THEREOF**
AUF SPIN-ORBIT-DREHMOMENT BASIERENDER ZUFALLSZAHLENGENERATOR UND HERSTELLUNGSVERFAHREN DAFÜR
GÉNÉRATEUR DE NOMBRES ALÉATOIRES BASÉ SUR UN COUPLE SPIN-ORBITE ET SON PROCÉDÉ DE FABRICATION

(30) Priority: 08.11.2023 KR 20230153395
(43) Date of publication of application: 14.05.2025
(73) Proprietor: Korea University Research and Business Foundation, Seoul 02841 (KR); Korea Advanced Institute of Science and Technology, Daejeon 34141 (KR)
(72) Inventor: KIM, Young Keun, 06009 Seoul (KR); LEE, Min Hyeok, 02585 Seoul (KR); YOON, Seok In, 02612 Seoul (KR); LEE, Kyung Jin, 34141 Daejeon (KR); KIM, Seok Jong, 34141 Daejeon (KR)
(74) Representative: Prüfer & Partner mbB Patentanwälte · Rechtsanwälte

(56) References cited:
- US-A1- 2017 330 070
- US-B1- 9 824 735
- KIM YUSUNG ET AL: "Spin-Orbit-Torque-Based Spin-Dice: A True Random-Number Generator", IEEE MAGNETICS LETTERS, vol. 6, 1 January 2015 (2015-01-01), pages 1 - 4, XP011594253, ISSN: 1949-307X, [retrieved on 20151210], DOI: 10.1109/LMAG.2015.2496548

## Description

### CROSS-REFERENCE TO RELATED APPLICATION

This application claims priority to Korean Patent Application No. 10-2023-0153395, filed on November 08, 2023, in the Korean Intellectual Property Office.

### BACKGROUND OF THE DISCLOSURE

### Field of the Disclosure

The present disclosure relates a spin-orbit torque-based random number generator and a fabricating method thereof. More particularly, the present disclosure relates to technology for implementing a random number generator being capable of spin-orbit torque switching based on a spin torque layer and having a low switching current value and a high-entropy random number generation function by controlling the ratio of damping-like torque (DLT) and field-like torque (FLT) among spin-orbit torque components.

### Description of the Related Art

The magnetic tunnel junction (MTJ), a core structure of spin-orbit torque (SOT) switching-based devices, may consist of a non-magnetic spin torque generation layer (hereinafter referred to as spin torque layer), a first magnetic layer (magnetization-free layer, hereinafter referred to as free layer), a tunnel barrier layer, and a second magnetic layer (magnetization pinned layer, hereinafter referred to as pinned layer).

Information is read using the tunneling magnetoresistance (TMR) phenomenon, in which the electrical resistance value of tunneling current passing through an insulating layer varies depending on the relative magnetization direction of the free layer and the pinned layer.

In order to realize a high tunneling magnetoresistance ratio, low recording current, and high integration, a magnetic tunnel junction must have perpendicular magnetic anisotropy (PMA) characteristics.

Perpendicular magnetic anisotropy means that the magnetization direction of the magnetic layer is perpendicular to the plane of the magnetic layer.

Recently, the spin-orbit torque (SOT) phenomenon inducing switching of a free layer using the spin Hall effect or Rashba effect, which occurs when current flows in a direction parallel to the plane of a spin torque layer adjacent to the free layer, was discovered.

The above technology is attracting attention as a technology that enables faster switching than the conventional spin-transfer torque (STT) recording method.

At this time, spin-orbit torque induced by in-plane current in the magnetized free layer induces magnetization in the in-plane direction.

When this current supply is stopped, the magnetization that was aligned in the in-plane direction is randomly aligned in the up or down direction perpendicular to the plane of the magnetic layer. Based on this random alignment, application to a true random number generator (TRNG) becomes possible.

A random number generator (RNG) is a device that generates a theoretically unpredictable series of numbers or symbols.

A random number generation function is a standard for systematically generating and applying random numbers, and may be a function that generates numbers applicable to encryption technology.

The key to implementing a spin-orbit torque-based random number generator is to maintain high entropy of a random number column and achieve low recording current by using specific materials and structures in a spin torque layer.

The related art (Appl. Phys. Lett. 118, 052401 (2021)) exemplifies a spin-orbit torque type random number generator based on Ta/CoFeB/MgO/Ta for random number generation in an artificial neural network.

A system with interference accuracy and low error rate similar to existing methods is designed.

### SUMMARY OF THE DISCLOSURE

Therefore, the present disclosure has been made in view of the above problems, and it is an object of the present disclosure to implement a spin-orbit torque-based random number generator being capable of spin-orbit torque (SOT) switching based on a spin torque layer and having a low switching current value and a high-entropy random number generation function by controlling the ratio of damping-like torque (DLT) and field-like torque (FLT) among spin-orbit torque components.

It is another object of the present disclosure to implement a spin-orbit torque-based random number generator having low switching current by maintaining perpendicular magnetic anisotropy and high entropy by laminating materials with different spin-orbit coupling sizes on a spin torque layer that contacts a free layer and provides in-plane current.

It is still another object of the present disclosure to provide a candidate material that is an SOT material for a random number generator, is a spin torque layer material with low DLT and high FLT efficiency, and has a high ratio of FLT to DLT.

It is yet another object of the present disclosure to implement a spin-orbit torque-based random number generator having low switching current while maintaining a random number generation function with high entropy by adjusting the ratio of FLT to DLT based on the structure of a spin torque layer and magnetic layer based on a candidate material that increases the ratio of FLT to DLT.

In accordance with one aspect of the present disclosure, provided is a spin-orbit torque-based random number generator including a spin torque generation layer including a first spin torque layer and a second spin torque layer, a magnetization-free layer, a tunnel barrier layer, and a magnetization pinned layer, wherein the second spin torque layer is disposed between the magnetization-free layer and the first spin torque layer and generates field-like torque (FLT) and damping-like torque (DLT) related to a magnetization direction of the magnetization-free layer; the first spin torque layer adjusts a torque ratio according to a size of field-like torque to a size of damping-like torque in conjunction with a thickness of the second spin torque layer; in the magnetization-free layer, a magnetization direction is randomly aligned up or down based on the adjusted torque ratio; and a random number is generated based on current that is switched and output based on the randomly aligned magnetization direction.

When a thickness of the second spin torque layer increases, the torque ratio may increase as a magnitude of the damping-like torque decreases in a state where a magnitude of the field-like torque is maintained. When a thickness of the second spin torque layer decreases, the torque ratio may decrease as a magnitude of the damping-like torque increases in a state where a magnitude of the field-like torque is maintained.

The first spin torque layer may be formed of any one of Ta, W, and Pt, and the second spin torque layer may be formed of Nb.

The second spin torque layer may be formed to have a thickness of 1 nm to 15 nm.

Based on the first spin torque layer and the second spin torque layer, according to the torque ratio with a high ratio of the field-like torque to the damping-like torque among spin-orbit torque components, a magnitude of switching current switching the magnetization direction may decrease, and switching efficiency of switching the magnetization direction may be increased.

As an entropy value of a random number column for a random number based on current output according to the torque ratio for repeatedly injected current is higher than a reference value related to randomness, the spin-orbit torque-based random number generator according to an embodiment of the present disclosure may implement a random number generation function.

In accordance with another aspect of the present disclosure, provided is a method of fabricating a spin-orbit torque-based random number generator, the method including forming a spin torque generation layer including a first spin torque layer and a second spin torque layer; forming a magnetization-free layer on the spin torque generation layer; forming a tunnel barrier layer on the magnetization-free layer; and forming a magnetization pinned layer on the tunnel barrier layer to form a spin-orbit torque-based random number generator, wherein the second spin torque layer is disposed between the magnetization-free layer and the first spin torque layer and generates field-like torque (FLT) and damping-like torque (DLT) related to a magnetization direction of the magnetization-free layer; the first spin torque layer adjusts a torque ratio according to a size of field-like torque to a size of damping-like torque in conjunction with a thickness of the second spin torque layer; in the magnetization-free layer, a magnetization direction is randomly aligned up or down based on the adjusted torque ratio; and the spin-orbit torque-based random number generator generates a random number based on current that is switched and output based on the randomly aligned magnetization direction.

When a thickness of the second spin torque layer increases, the torque ratio may increase as a magnitude of the damping-like torque decreases in a state where a magnitude of the field-like torque is maintained. When a thickness of the second spin torque layer decreases, the torque ratio may decrease as a magnitude of the damping-like torque increases in a state where a magnitude of the field-like torque is maintained.

The forming of the spin torque generation layer may include forming the first spin torque layer using any one of Ta, W, and Pt; and forming the second spin torque layer using Nb.

The second spin torque layer may be formed to have a thickness of 1 nm to 15 nm.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram explaining the structure and configuration of a spin-orbit torque-based random number generator according to an embodiment of the present disclosure;
FIG. 2 is a diagram explaining the random number generation operation of the spin-orbit torque-based random number generator according to an embodiment of the present disclosure;
FIG. 3 is a diagram explaining the ratio control structure of the damping-like torque and field-like torque of the spin-orbit torque-based random number generator according to an embodiment of the present disclosure;
FIGS. 4A to 4C are diagrams explaining the three-dimensional structure of the spin-orbit torque-based random number generator according to an embodiment of the present disclosure;
FIGS. 5A and 5B are graphs explaining the perpendicular magnetic anisotropy of the spin-orbit torque-based random number generator according to an embodiment of the present disclosure;
FIGS. 6 and 7 are graphs explaining simulation results for ratio control of the damping-like torque and field-like torque of the spin-orbit torque-based random number generator according to an embodiment of the present disclosure;
FIGS. 8A to 10 are graphs explaining switching operation and efficiency related to ratio control of damping-like torque and field-like torque in the spin-orbit torque-based random number generator according to an embodiment of the present disclosure; and
FIG. 11 includes graphs explaining entropy test results of the switching probability and random number column of the spin-orbit torque-based random number generator according to an embodiment of the present disclosure.

### DETAILED DESCRIPTION OF THE DISCLOSURE

Hereinafter, the embodiments of the present disclosure will be described in detail with reference to the drawings.

However, it should be understood that the present disclosure is not limited to the embodiments according to the concept of the present disclosure, but includes changes, equivalents, or alternatives falling within the scope of the present disclosure.

In the following description of the present disclosure, detailed description of known functions and configurations incorporated herein will be omitted when it may make the subject matter of the present disclosure unclear.

In addition, the terms used in the specification are defined in consideration of functions used in the present disclosure, and can be changed according to the intent or conventionally used methods of clients, operators, and users. Accordingly, definitions of the terms should be understood on the basis of the entire description of the present specification.

In description of the drawings, like reference numerals may be used for similar elements.

The singular expressions in the present specification may encompass plural expressions unless clearly specified otherwise in context.

In this specification, expressions such as "A or B" and "at least one of A and/or B" may include all possible combinations of the items listed together.

Expressions such as "first" and "second" may be used to qualify the elements irrespective of order or importance, and are used to distinguish one element from another and do not limit the elements.

It will be understood that when an element (e.g., first) is referred to as being "connected to" or "coupled to" another element (e.g., second), the first element may be directly connected to the second element or may be connected to the second element via an intervening element (e.g., third).

As used herein, "configured to" may be used interchangeably with, for example, "suitable for", "ability to", "changed to", "made to", "capable of", or "designed to" in terms of hardware or software.

In some situations, the expression "device configured to" may mean that the device "may do ~" with other devices or components.

For example, in the sentence "processor configured to perform A, B, and C", the processor may refer to a general purpose processor (e.g., CPU or application processor) capable of performing corresponding operation by running a dedicated processor (e.g., embedded processor) for performing the corresponding operation, or one or more software programs stored in a memory device.

In addition, the expression "or" means "inclusive or" rather than "exclusive or".

That is, unless mentioned otherwise or clearly inferred from context, the expression "x uses a or b" means any one of natural inclusive permutations.

Terms, such as "unit" or "module", etc., should be understood as a unit that processes at least one function or operation and that may be embodied in a hardware manner, a software manner, or a combination of the hardware manner and the software manner.

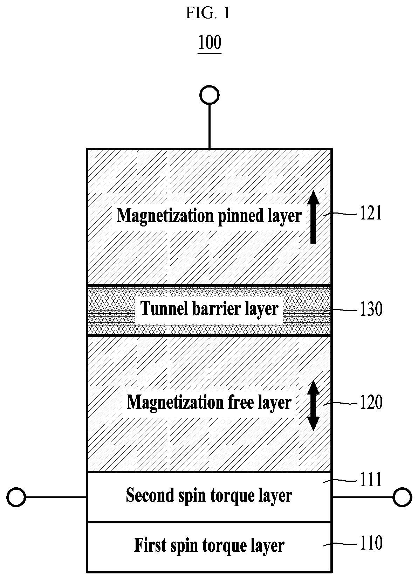

FIG. 1 is a diagram explaining the structure and configuration of a spin-orbit torque-based random number generator according to an embodiment of the present disclosure.

FIG. 1 illustrates the structure and configuration of the spin-orbit torque-based random number generator according to an embodiment of the present disclosure.

Referring to FIG. 1, a spin-orbit torque-based random number generator 100 according to an embodiment of the present disclosure includes a first spin torque layer 110, a second spin torque layer 111, a magnetization-free layer 120, a magnetization pinned layer 121, and a tunnel barrier layer 130 disposed between the magnetization-free layer 120 and the magnetization pinned layer 121.

For example, the spin-orbit torque-based random number generator 100 may be referred to as true random number generator (TRNG).

For example, the first spin torque layer 110 and the second spin torque layer 111 may be configured as a spin torque generation layer.

A method of fabricating the spin-orbit torque-based random number generator 100 according to an embodiment of the present disclosure may include a step of forming a spin torque generation layer including the first spin torque layer 110 and the second spin torque layer 111, a step of forming the magnetization-free layer 120 on the spin torque generation layer, a step of forming the tunnel barrier layer 130 on the magnetization-free layer 120, and a step of forming the magnetization pinned layer 121 on the tunnel barrier layer 130 to form the spin-orbit torque-based random number generator 100.

For example, the second spin torque layer 111 may be located between the magnetization-free layer 120 and the first spin torque layer 110, and may generate field-like torque (FLT) and damping-like torque (DLT) related to the magnetization direction of the magnetization-free layer 120.

The first spin torque layer 110 may adjust a torque ratio according to the size of field-like torque to the size of damping-like torque in conjunction with the thickness of the second spin torque layer 111.

In the magnetization-free layer 120, a magnetization direction is randomly aligned up or down based on the adjusted torque ratio.

Accordingly, the spin-orbit torque-based random number generator 100 may generate a random number based on current that is switched and output based on the randomly aligned magnetization direction.

Depending on whether the randomly aligned magnetization direction of the magnetization-free layer 120 is the same or opposite to the magnetization direction of the magnetization pinned layer 121, the resistance state of the spin-orbit torque-based random number generator 100 may be a high impedance state or a low impedance state. As a random number is determined based on current output according to the determined state, the spin-orbit torque-based random number generator 100 may generate a random number.

For example, when the thickness of the second spin torque layer 111 increases, the torque ratio may increase as the magnitude of the damping-like torque decreases in a state where the magnitude of the field-like torque is maintained. When the thickness of the second spin torque layer 111 decreases, the torque ratio may decrease as the magnitude of the damping-like torque increases in a state where the magnitude of the field-like torque is maintained.

The first spin torque layer 110 may be formed of any one of Ta, W, and Pt.

The second spin torque layer 111 may be formed of Nb.

The first spin torque layer 110 may be formed of a metal with high damping-like torque efficiency. The second spin torque layer 111 may be formed of a metal with high field-like torque efficiency, and may be formed of a material whose damping-like torque efficiency is lower than that of the first spin torque layer 110.

That is, the material forming the first spin torque layer 110 and the material forming the second spin torque layer 111 are not limited to the above examples and may be replaced with materials that may achieve the same performance.

For example, the second spin torque layer 111 may be formed to have a thickness of 1 nm to 15 nm.

For example, in the spin-orbit torque-based random number generator 100, based on the first spin torque layer 110 and the second spin torque layer 111, according to the torque ratio with a high ratio of the field-like torque to the damping-like torque among spin-orbit torque components, the magnitude of switching current switching the magnetization direction may decrease, and the switching efficiency of switching the magnetization direction may be increased.

As the entropy value of a random number column for a random number based on current output according to the torque ratio for repeatedly injected current is higher than a reference value related to randomness, the spin-orbit torque-based random number generator according to an embodiment of the present disclosure 100 may implement a random number generation function.

Accordingly, the present disclosure may implement a spin-orbit torque-based random number generator being capable of spin-orbit torque (SOT) switching based on a spin torque layer and having a low switching current value and a high-entropy random number generation function by controlling the ratio of damping-like torque (DLT) and field-like torque (FLT) among spin-orbit torque components.

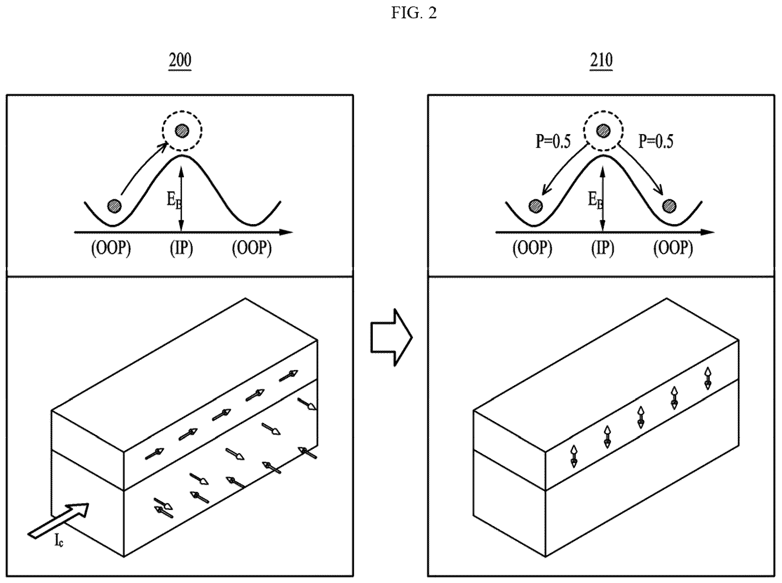

FIG. 2 is a diagram explaining the random number generation operation of the spin-orbit torque-based random number generator according to an embodiment of the present disclosure.

FIG. 2 illustrates the principle by which a spin-orbit torque device operates as a random number generator in relation to the random number generation operation of the spin-orbit torque-based random number generator according to an embodiment of the present disclosure.

Referring to FIG. 2, a first state 200 illustrates the state of the spin-orbit torque device when current is applied (On state), and a second state 210 illustrates the state of the spin-orbit torque device when current is not applied (Off state).

In the first state 200, when in-plane current is applied to the spin torque generation layer, the spindle is classified as upper or lower, and there are two types of torque caused by spin current. Here, the two torques are damping-like torque and field-like torque.

As shown in the block diagram, the magnetization of the magnetization-free layer is initially vertical due to the two torques, but when torque is applied, the magnetization is determined to be in the in-plane direction, which is the X direction.

That is, when current is injected, the magnetization, which was standing in a stable vertical direction, lies in the X direction and sticks in-plane.

In addition, as shown in the energy band, it can be seen that the energy state is fixed to a specific location.

When current applied in-plane is stopped in the second state 210, where current injection is stopped, the magnetization direction falls from the in-plane direction, which is an unstable state, to the equally stable upward or downward direction.

In addition, as shown in the energy band, the energy state is not fixed at a specific location but changes randomly in one of two directions.

Here, it can be operated as a random number generator based on binary data that is randomly determined as "1" or "0" based on the magnetization direction that changes in the upward or downward direction.

In addition, the ratio determined as "1" or "0" and the efficiency of switching are influenced by the ratio of field-like torque to damping-like torque. The proportion of field-like torque is higher compared to damping-like torque, so it can be applied as a low switching current value and a high-entropy random number generation function.

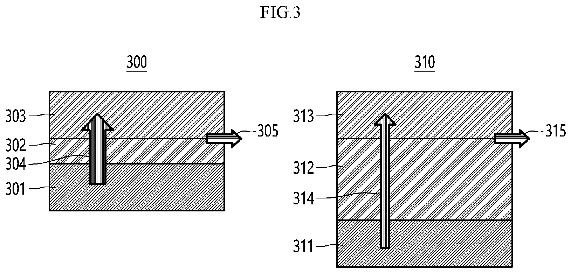

FIG. 3 is a diagram explaining the ratio control structure of the damping-like torque and field-like torque of the spin-orbit torque-based random number generator according to an embodiment of the present disclosure.

FIG. 3 illustrates the ratio of damping-like torque and field-like torque depending on the thickness of the second spin torque layer in relation to the ratio control structure of the damping-like torque and field-like torque of the spin-orbit torque-based random number generator according to an embodiment of the present disclosure.

Referring to FIG. 3, a first structure 300 of the spin-orbit torque-based random number generator according to an embodiment of the present disclosure includes a first spin torque layer 301, a second spin torque layer 302, and a magnetization-free layer 303.

A second structure 310 of the spin-orbit torque-based random number generator according to an embodiment of the present disclosure includes a first spin torque layer 311, a second spin torque layer 312, and a magnetization-free layer 313.

When comparing the torque ratio of field-like torque 305 to damping-like torque 304 of the first structure 300 and the torque ratio of field-like torque 315 to damping-like torque 314 of the second structure 310, the torque ratio of the second structure 310 is smaller than that of the first structure 300.

When comparing the thickness of the second spin torque layer 302 and the thickness of the second spin torque layer 312, the thickness of the second spin torque layer 312 is larger than that of the second spin torque layer 302, and the torque ratio is small.

Accordingly, the spin-orbit torque-based random number generator according to an embodiment of the present disclosure may control the torque ratio by adjusting the thickness of the second spin torque layer, and may maintain perpendicular magnetic anisotropy and high entropy and have low switching current based on torque ratio control.

Accordingly, the present disclosure may implement a spin-orbit torque-based random number generator having low switching current by maintaining perpendicular magnetic anisotropy and high entropy by laminating materials with different spin-orbit coupling sizes on a spin torque layer that contacts a free layer and provides in-plane current.

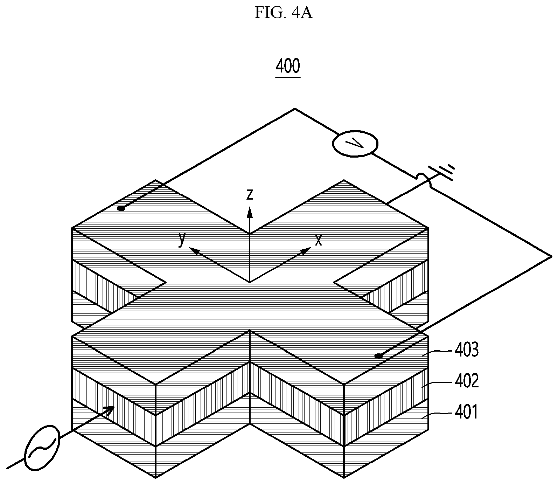

FIGS. 4A to 4C are diagrams explaining the three-dimensional structure of the spin-orbit torque-based random number generator according to an embodiment of the present disclosure.

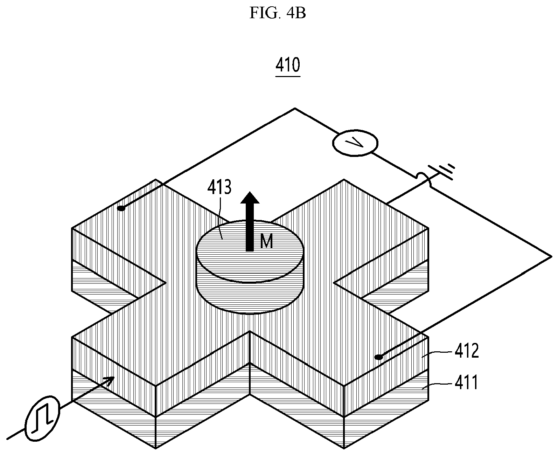

FIGS. 4A and 4B illustrate a three-dimensional structure of the spin-orbit torque-based random number generator according to an embodiment of the present disclosure.

Referring to FIG. 4A, a three-dimensional structure 400 of the spin-orbit torque-based random number generator according to an embodiment of the present disclosure is a structure for measuring spin-orbit torque (SOT) efficiency and has a magnetization-free layer formed on a spin torque generation layer.

Sputtering may be used as thin film deposition necessary to fabricate the device structure of the spin-orbit torque-based random number generator according to an embodiment of the present disclosure.

The base pressure is 5 × 10⁻⁹ Torr or less, and deposition is performed in an argon (Ar) atmosphere.

The thickness of each layer of the spin-orbit torque-based random number generator may be adjusted using deposition time and sputtering power.

The three-dimensional structure 400 of the spin-orbit torque-based random number generator includes a first spin torque layer 401, a second spin torque layer 402, and a magnetization-free layer 403.

The first spin torque layer 401 may be formed on a substrate, and a natural oxide layer may be formed on the substrate.

The substrate may be formed of Si, and the natural oxide layer may be formed of SiO₂ and may be amorphous.

The first spin torque layer 401 and the second spin torque layer 402 may be deposited and formed using direct current magnetron sputtering.

The size of a target used for thin film production may be 2 inches in diameter, and the power may be 50 W.

The magnetization-free layer 403 may be formed of CoFeB, and the composition of the sputtering target may be Co40Fe40B20 (at%).

Additionally, an insulating layer may be formed of MgO, and a capping layer may be formed of Ta.

After thin film deposition, heat treatment may be performed at a temperature of 300 °C for 1 hour. During heat treatment, base pressure may be in a range of 10⁻⁶ Torr, and an external magnetic field of 6 k Oe may be applied in a direction perpendicular to the thin film during heat treatment.

The three-dimensional structure 400 of the spin-orbit torque-based random number generator may be formed as a cross-shaped Hall bar with a size of 5 × 35 µm².

Referring to FIG. 4B, a three-dimensional structure 410 of the spin-orbit torque-based random number generator according to an embodiment of the present disclosure may be a structure for measuring spin-orbit torque (SOT) efficiency, and may be a structure with a magnetization-free layer formed on a spin torque generation layer.

The three-dimensional structure 410 of the spin-orbit torque-based random number generator may include a first spin torque layer 411, a second spin torque layer 412, and a magnetization-free layer 413.

The three-dimensional structure 410 of the spin-orbit torque-based random number generator has an island shape for confirming SOT switching characteristics and may be formed to have a diameter of 5 µm.

The three-dimensional structure 410 of the spin-orbit torque-based random number generator according to an embodiment of the present disclosure may be a structure for measuring spin-orbit torque (SOT) efficiency, and may have a structure with a magnetization-free layer formed on a spin torque generation layer.

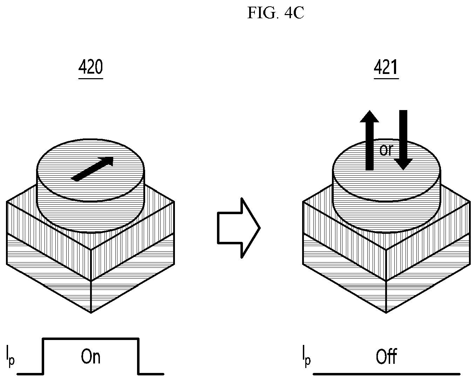

FIG. 4C illustrates random number generation in the three-dimensional structure of the spin-orbit torque-based random number generator according to an embodiment of the present disclosure.

Referring to FIG. 4C, a first state 420 shows the magnetization direction of the magnetization-free layer where the spin-orbit torque-based random number generator is "On", and a second state 421 shows an "Off" operation that causes the magnetization-free layer of the spin-orbit torque-based random number generator to have a magnetization direction corresponding to "1" or "0".

During the injection of current pulse, the magnetization is placed in the in-plane direction, and when the current supply is stopped, the magnetization is randomly aligned in the z-direction corresponding to the vertical direction.

As for the alignment direction, the switching probability distribution corresponding to the horizontal Hall voltage may be read.

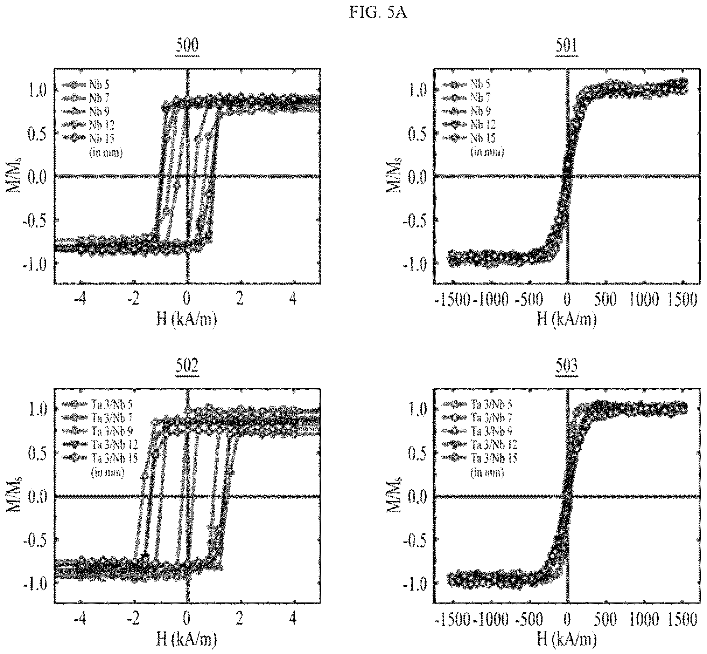

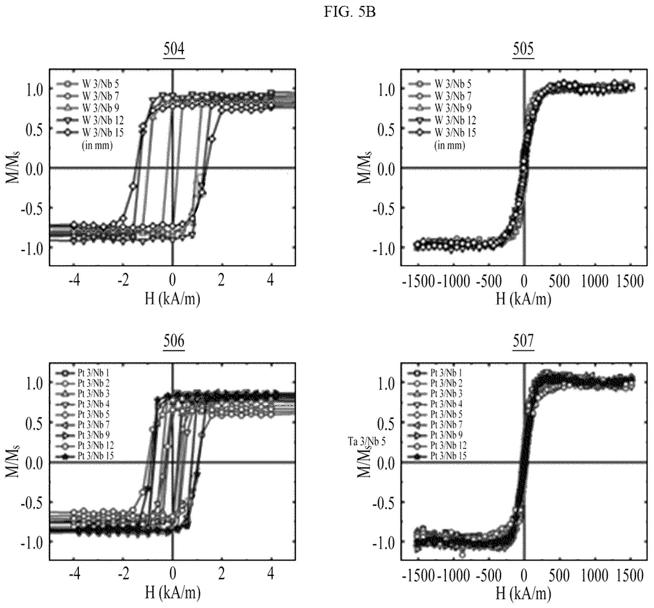

FIGS. 5A and 5B are graphs explaining the perpendicular magnetic anisotropy of the spin-orbit torque-based random number generator according to an embodiment of the present disclosure.

FIGS. 5A and 5B illustrate magnetic hysteresis curves measured in the plane perpendicular direction using a vibrating sample magnetometer (VSM) in relation to the perpendicular magnetic anisotropy of the spin-orbit torque-based random number generator according to an embodiment of the present disclosure.

Referring to FIGS. 5A and 5B, graph 500 shows a first embodiment in which the spin torque generation layer consists of the second spin torque layer formed of niobium (Nb) without the first spin torque layer and the thickness is adjusted to 5 nm to 15 nm, and graph 501 shows magnetic hysteresis curves measured by applying a magnetic field in the thin film in-plane direction in the structure according to the first embodiment described above.

Graph 502 shows a second embodiment in which the spin torque generation layer consists of the first spin torque layer formed of tantalum (Ta) and having a thickness of about 3 nm and the second spin torque layer formed of niobium (Nb) and the thickness is adjusted to 5 nm to 15 nm, and graph 503 shows magnetic hysteresis curves measured by applying a magnetic field in the thin film in-plane direction in the structure according to the second embodiment described above.

Graph 504 shows a third embodiment in which the spin torque generation layer consists of the first spin torque layer formed of tungsten (W) and having a thickness of about 3 nm and the second spin torque layer formed of niobium (Nb) and the thickness is adjusted to 5 nm to 15 nm, and graph 505 shows magnetic hysteresis curves measured by applying a magnetic field in the thin film in-plane direction in the structure according to the third embodiment described above.

Graph 506 shows a fourth embodiment in which the spin torque generation layer consists of the first spin torque layer formed of platinum (Pt) and having a thickness of about 3 nm and the second spin torque layer formed of niobium (Nb) and the thickness is adjusted to 1 nm to 15 nm, and graph 507 shows magnetic hysteresis curves measured by applying a magnetic field in the thin film in-plane direction in the structure according to the fourth embodiment described above.

Referring to graph 501, graph 503, graph 505, and graph 507, when the second spin torque layer is formed of niobium, magnetic anisotropy perpendicular to the magnetization-free layer is exhibited.

In addition, it can be confirmed that perpendicular magnetic anisotropy occurs even when the thickness of the second spin torque layer is changed.

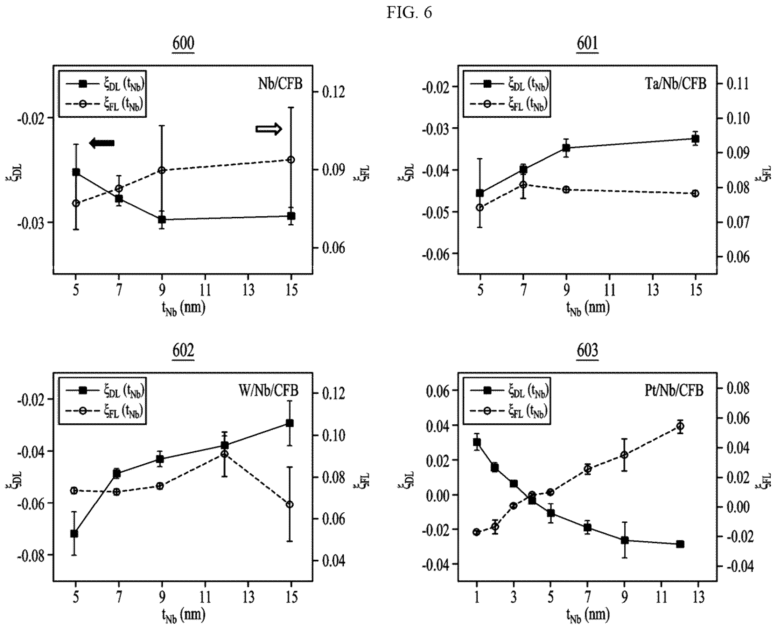

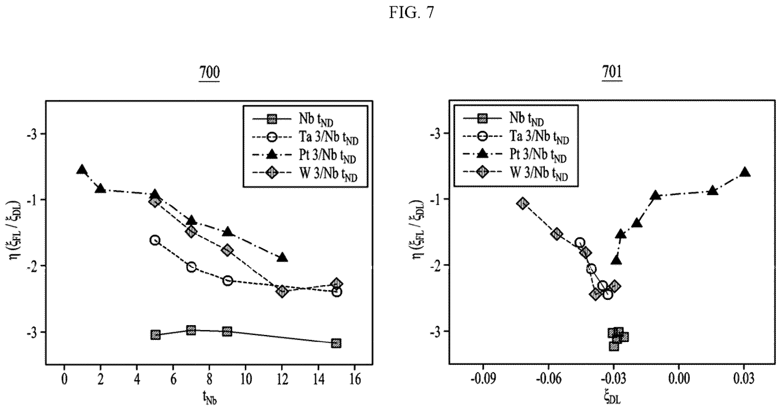

FIGS. 6 and 7 are graphs explaining measurement results for ratio control of the damping-like torque and field-like torque of the spin-orbit torque-based random number generator according to an embodiment of the present disclosure.

FIG. 6 shows the measurement results for the efficiency of damping-like torque (ξDL) and field-like torque (ξFL) according to the niobium thickness measured using the harmonic measurement method in the Nb/CoFeB/MgO/Ta and Ta (W, Pt)/Nb/CoFeB/MgO/Ta structures (In the case of Pt, the thickness may change) in relation to the ratio control of damping-like torque and field-like torque, regarding the ratio control of the damping-like torque and field-like torque of the spin-orbit torque-based random number generator according to an embodiment of the present disclosure.

Referring to FIG. 6, graph 600 shows the measurement results of the efficiency of damping-like torque and field-like torque for a first embodiment in which the spin torque generation layer is formed only of Nb.

Graph 601 shows the measurement results of the efficiency of damping-like torque and field-like torque for a second embodiment in which the spin torque generation layer consists of the first spin torque layer formed of Ta and the second spin torque layer formed of Nb.

Graph 602 shows the measurement results of the efficiency of damping-like torque and field-like torque for a third embodiment in which the spin torque generation layer consists of the first spin torque layer formed of W and the second spin torque layer formed of Nb.

Graph 603 shows the measurement results of the efficiency of damping-like torque and field-like torque for a fourth embodiment in which the spin torque generation layer consists of the first spin torque layer formed of Pt and the second spin torque layer formed of Nb.

In graph 600, field-like torque and damping-like torque tend to increase as the thickness of niobium increases and gradually become saturated.

The efficiency of damping-like torque is about -0.03, which is lower than other heavy metals (W: -0.33, Ta: -0.12, Pt: 0.09, etc.), but the efficiency of field-like torque is 0.09, and the field-like torque/damping-like torque ratio (hereinafter η) is about 3, showing a high ratio.

In the case of the Ta, W, and Pt/Nb structure according to graphs 601 and 603, heavy metals with high damping-like torque efficiency are intentionally placed under a niobium layer. Accordingly, as the thickness of niobium decreases, the influence of damping-like torque applied by the Ta, W, and Pt layers to the free layer increases, increasing the damping-like torque efficiency of the entire device.

On the other hand, in the case of field-like torque, which is known to have characteristics coming from the interface of the non-magnetic layer/magnetic free layer, the rate of change depending on the thickness of niobium is insignificant compared to damping-like torque.

Characteristically, in the case of the Pt/Nb structure, the signs of the spin-orbit coupling of Pt and Nb are opposite to each other, so the torque occurring from the two layers competes with each other. As the influence of niobium increases (as the thickness increases), a point is identified where the sign of the overall efficiency changes, after which it tends to gradually become saturated.

FIG. 7 shows the ratio of field-like torque and damping-like torque according to the niobium thickness measured using the harmonic measurement method in the Nb/CoFeB/MgO/Ta and Ta(W, Pt)/Nb/CoFeB/MgO/Ta (unit: nm) structures, regarding the ratio control of the damping-like torque and field-like torque of the spin-orbit torque-based random number generator according to an embodiment of the present disclosure.

Referring to FIG. 7, graph 700 and graph 701 show the ratio (η) of field-like torque to damping-like torque of each structure according to the thickness of niobium confirmed in FIG. 6.

The ratio (η) shows a value that varies from -0.5 to -3, and the Nb structure in graph 700 may show the highest ratio (η) among the four structures.

According to graph 701, as the influence of niobium decreases, the Ta, W or Pt/Nb structure is easily influenced by the large damping-like torque of the heavy metal layer, showing high damping-like torque efficiency. On the other hand, since the efficiency of field-like torque has little change, the ratio (η) tends to gradually decrease.

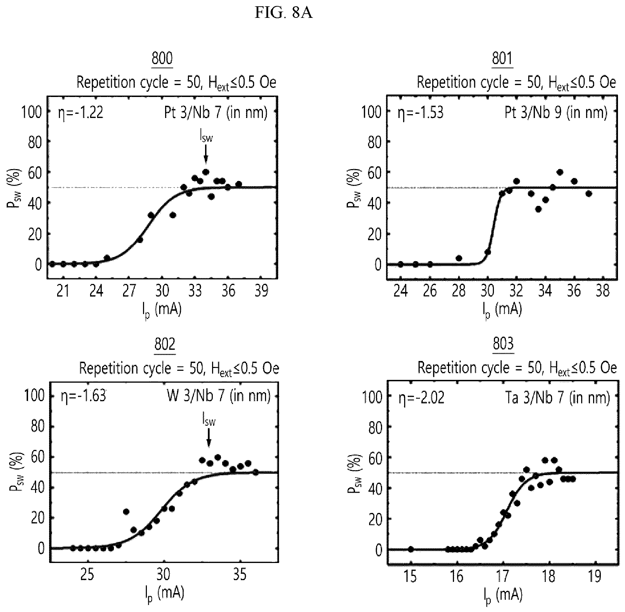

FIGS. 8A to 10 are graphs explaining switching operation and efficiency related to ratio control of damping-like torque and field-like torque in the spin-orbit torque-based random number generator according to an embodiment of the present disclosure.

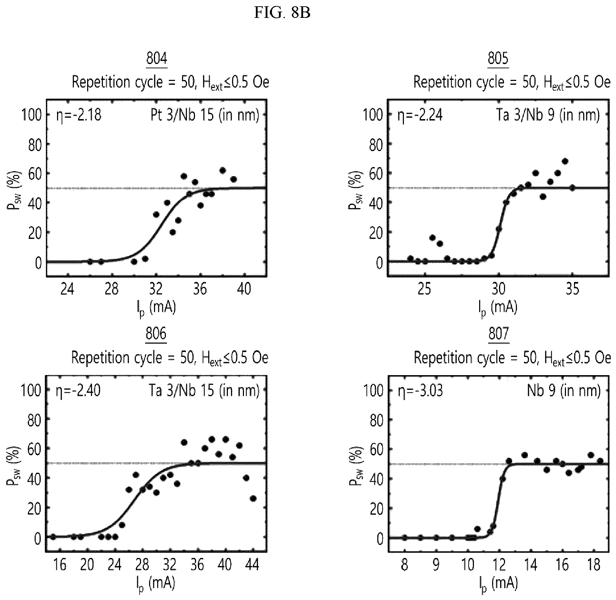

FIGS. 8A and 8B show the switching probability distribution (P_{SW}) and the corresponding switching operation current (I_{SW}) of eight devices with different ratios (η) in relation to switching operation and efficiency related to the ratio control of damping-like torque and field-like torque in the spin-orbit torque-based random number generator according to an embodiment of the present disclosure.

Referring to FIG. 8A, graph 800 illustrates the switching probability distribution and switching operation current when the ratio (η) is -1.22, graph 801 illustrates the switching probability distribution and switching operation current when the ratio (η) is -1.53, graph 802 illustrates the switching probability distribution and switching operation current when the ratio (η) is -1.63, and graph 803 illustrates the switching probability distribution and switching operation current when the ratio (η) is -2.02.

Referring to FIG. 8B, graph 804 illustrates the switching probability distribution and switching operation current when the ratio (η) is -2.18, graph 805 illustrates the switching probability distribution and switching operation current when the ratio (η) is -2.24, graph 806 illustrates the switching probability distribution and switching operation current when the ratio (η) is -2.40, and graph 807 illustrates the switching probability distribution and switching operation current when the ratio (η) is -3.03.

For example, graphs 800 to 807 show the results of switching probability distribution (P_{SW}) and switching operation current (I_{SW}) measured using a four-point probe.

All current pulses were injected in an environment without an external magnetic field, the pulse length was the same at 10 µsec, and pulses of the same size were injected repeatedly 50 times.

The switching probability is 0 because the SOT caused by small size pulses is not enough to completely lay down the free layer.

As the size of the injected pulse increases, the probability of switching increases and eventually converges to 50 %.

This tendency follows the Boltzmann sigmoidal function, and using this, the size of the current pulse at which the switching probability is 49 % may be defined as switching current.

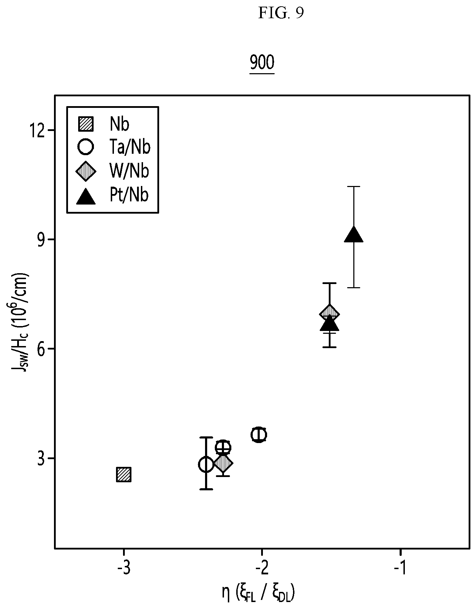

FIG. 9 illustrates the trend for the ratio (η) of the values when the switching current density (J_{sw}) of eight devices with different ratios (η) related to the ratio control of damping-like torque and field-like torque is normalized with the coercive field (H_{c}) in the spin-orbit torque-based random number generator according to an embodiment of the present disclosure.

Referring to FIG. 9, in graph 900, the value of switching current for ratio (η) in graphs 800 to 807 described in FIGS. 8A and 8B is converted to switching current density/coercive field (J_{sw}/H_{c}), and the value indicates the tendency for the size of ratio (η).

The switching current density of a spin-orbit torque device with a multi-domain magnetic layer tends to be proportional to the size of the coercive field.

Accordingly, in order to check the effect of ratio (η) alone on the current density of eight devices with different materials and structures, it can be standardized by dividing the coercive field of each device.

As a result, it can be seen that the larger the value of ratio (η), the higher the switching efficiency.

Accordingly, the present disclosure may provide a candidate material that is an SOT material for a random number generator, is a spin torque layer material with low DLT and high FLT efficiency, and has a high ratio of FLT to DLT.

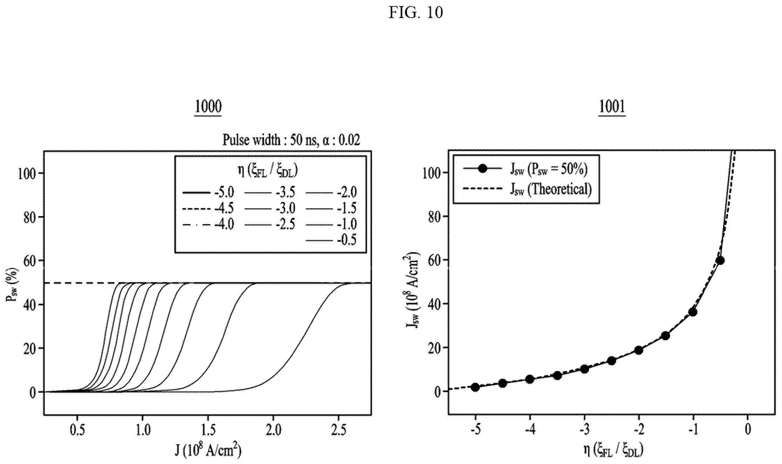

FIG. 10 illustrates the results of Fokker-Planck calculations using macrospin approximation showing the effect of the size of ratio (η) related to the ratio control of damping-like torque and field-like torque on switching current density in the spin-orbit torque-based random number generator according to an embodiment of the present disclosure.

Referring to FIG. 10, graphs 1000 and 1001 show the effect of the size of ratio (η) on switching current density as a result of Fokker-Planck calculation using macrospin approximation.

As the ratio (η) increases, the current density required for switching of the spin-orbit torque device decreases, which supports the experimental results described in the previous figure.

In graph 1000, the charging current flowing through the first spin torque layer may have a pulse width of 50 ns and an increase time of 2 ns.

Graph 1001 shows the switching current density (J_{SW}). Here, the switching probability (P_{SW}) is 50 %.

Graph 1001 shows that the theoretical results and experimental results are similar.

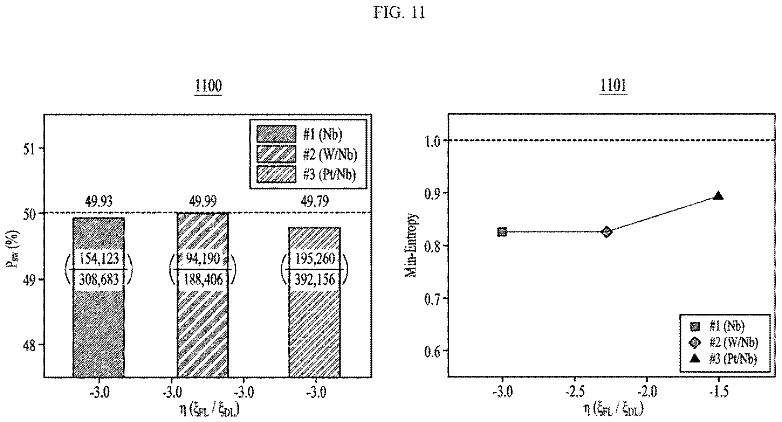

FIG. 11 includes graphs explaining entropy test results of the switching probability and random number column of the spin-orbit torque-based random number generator according to an embodiment of the present disclosure.

FIG. 11 illustrates the entropy test results of the switching probability and random number column of the spin-orbit torque-based random number generator according to an embodiment of the present disclosure.

Referring to FIG. 11, graph 1100 shows the switching probability of a spin-orbit torque-based random number generator including a spin torque generation layer that includes only a second spin torque layer and a spin-orbit torque-based random number generator including a spin torque generation layer including first and second spin torque layers.

A random number column is created by selecting three elements with different ratio (η) sizes, and the randomness of each string is checked.

To check the effect on the size of ratio (η), the following three devices were selected.

In the first device, the second spin torque layer is formed of Nb. In the second device, the second spin torque layer is formed of Nb and the first spin torque layer is formed of W. In the third device, the second spin torque layer is formed of Nb and the first spin torque layer is formed of Pt.

In graph 1100, the ratio (η) in the first device is -3.03, the ratio (η) in the second device is -2.18, and the ratio (η) in the third device is -1.53.

The method for obtaining random numbers from each device is as follows. First, it is confirmed whether SOT switching is secured under an external magnetic field.

Next, a current pulse of sufficient magnitude is injected 1,000 times in an environment without an external magnetic field. At this time, "1" is input when switching occurs, and "0" is input when switching does not occur.

After every 1,000 random number generations, it is verified that SOT switching is secured under an external magnetic field again to confirm whether the random number column was obtained from a normally operating device.

The random number column generated until each device fails to perform a switching operation due to deterioration due to repetitive current injection may be 308,683 bits for the first device, 188,406 bits for the second device, and 392,156 bits for the third device.

The switching probability of the devices may be 49.93 %, 49.99 %, and 49.79 %, respectively.

Graph 1101 shows the minimum entropy test results of random number columns generated in a spin-orbit torque-based random number generator including a spin torque generation layer that includes only a second spin torque layer and a spin-orbit torque-based random number generator including a spin torque generation layer including first and second spin torque layers.

Graph 1101 shows the results of the NIST SP 800-90B test provided by NIST (Institute of Standards and Technology) to check the randomness of the random number column.

In this test, 10 estimators that represent randomness as entropy are used, and the lowest value (Min-entropy) among the 10 estimators is expressed as the representative entropy value of the random number column, and the results are shown in Table 1 below.

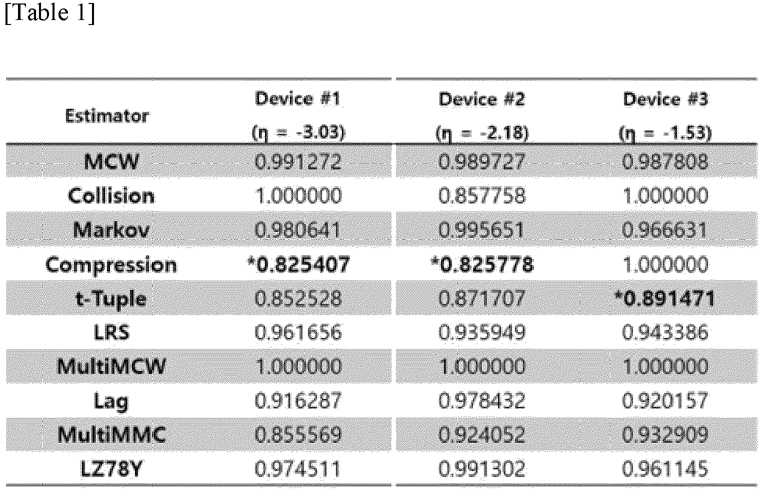

In Table 1, test results and low values (Min-entropy) of each random number column using the estimator are shown for the first device (Device #1), the second device (Device #2), and the third device (Device #3).

The first device has a structure in which the spin torque generation layer is formed of Nb. In the second device, the spin torque generation layer consists of the first spin torque layer and the second spin torque layer. In the second device, the first spin torque layer is formed of W, and the second spin torque layer is formed of Nb.

In the third device, the first spin torque layer is formed of Pt and the second spin torque layer is formed of Nb.

When the entropy value is n (0 ≤ n ≤ 1), it means that 1/n operations are required to generate a 1-bit random number. In the case of a perfect random number generator, entropy n may be 1.

The NIST SP800-90B test results for each random number column may be shown in FIG. 10. The Min-entropy values of the three devices are 0.825407, 0.825778, and 0.891471, respectively, so high entropy values may be secured regardless of the size of η.

Accordingly, the present disclosure may implement a spin-orbit torque-based random number generator having low switching current while maintaining a random number generation function by adjusting the ratio of FLT to DLT and entropy based on the structure of a spin torque layer and magnetic layer based on a candidate material that increases the ratio of FLT to DLT.

The present disclosure can implement a spin-orbit torque-based random number generator being capable of spin-orbit torque (SOT) switching based on a spin torque layer and having a low switching current value and a high-entropy random number generation function by controlling the ratio of damping-like torque (DLT) and field-like torque (FLT) among spin-orbit torque components.

The present disclosure can implement a spin-orbit torque-based random number generator having low switching current by maintaining perpendicular magnetic anisotropy and high entropy by laminating materials with different spin-orbit coupling sizes on a spin torque layer that contacts a free layer and provides in-plane current.

The present disclosure can provide a candidate material that is an SOT material for a random number generator, is a spin torque layer material with low DLT and high FLT efficiency, and has a high ratio of FLT to DLT.

The present disclosure can implement a spin-orbit torque-based random number generator having low switching current while maintaining a random number generation function with high entropy by adjusting the ratio of FLT to DLT based on the structure of a spin torque layer and magnetic layer based on a candidate material that increases the ratio of FLT to DLT.

In the above-described specific embodiments, elements included in the invention are expressed in singular or plural in accordance with the specific embodiments shown.

It should be understood, however, that the singular or plural representations are to be chosen as appropriate to the situation presented for the purpose of description and that the above-described embodiments are not limited to the singular or plural constituent elements. The constituent elements expressed in plural may be composed of a single number, and constituent elements expressed in singular form may be composed of a plurality of elements.

In addition, the present disclosure has been described with reference to exemplary embodiments, but it should be understood that various modifications may be made without departing from the scope of the present disclosure.

Therefore, the scope of the present disclosure should not be limited by the embodiments, but should be determined by the following claims and equivalents to the following claims.

## Claims

1. A spin-orbit torque-based random number generator, comprising:
a spin torque generation layer comprising a first spin torque layer and a second spin torque layer, a magnetization-free layer, a tunnel barrier layer, and a magnetization pinned layer,
wherein the second spin torque layer is disposed between the magnetization-free layer and the first spin torque layer and generates field-like torque (FLT) and damping-like torque (DLT) related to a magnetization direction of the magnetization-free layer;
the first spin torque layer adjusts a torque ratio according to a size of field-like torque to a size of damping-like torque in conjunction with a thickness of the second spin torque layer;
in the magnetization-free layer, a magnetization direction is randomly aligned up or down based on the adjusted torque ratio; and
a random number is generated based on current that is switched and output based on the randomly aligned magnetization direction.

2. The spin-orbit torque-based random number generator according to claim 1, wherein, when a thickness of the second spin torque layer increases, the torque ratio increases as a magnitude of the damping-like torque decreases in a state where a magnitude of the field-like torque is maintained, and
when a thickness of the second spin torque layer decreases, the torque ratio decreases as a magnitude of the damping-like torque increases in a state where a magnitude of the field-like torque is maintained.

3. The spin-orbit torque-based random number generator according to claim 1 or 2, wherein the first spin torque layer is formed of any one of Ta, W, and Pt, and the second spin torque layer is formed of Nb.

4. The spin-orbit torque-based random number generator according to claim 3, wherein the second spin torque layer is formed to have a thickness of 1 nm to 15 nm.

5. The spin-orbit torque-based random number generator according to one of claims 1 to 4, wherein, based on the first spin torque layer and the second spin torque layer, according to the torque ratio with a high ratio of the field-like torque to the damping-like torque among spin-orbit torque components, a magnitude of switching current switching the magnetization direction decreases, and switching efficiency of switching the magnetization direction is increased.

6. The spin-orbit torque-based random number generator according to claim 5, wherein, as an entropy value of a random number column for a random number based on current output according to the torque ratio for repeatedly injected current is higher than a reference value related to randomness, a random number generation function is implemented.

7. A method of fabricating a spin-orbit torque-based random number generator, comprising:
forming a spin torque generation layer comprising a first spin torque layer and a second spin torque layer;
forming a magnetization-free layer on the spin torque generation layer;
forming a tunnel barrier layer on the magnetization-free layer; and
forming a magnetization pinned layer on the tunnel barrier layer to form a spin-orbit torque-based random number generator,
wherein the second spin torque layer is disposed between the magnetization-free layer and the first spin torque layer and generates field-like torque (FLT) and damping-like torque (DLT) related to a magnetization direction of the magnetization-free layer;
the first spin torque layer adjusts a torque ratio according to a size of field-like torque to a size of damping-like torque in conjunction with a thickness of the second spin torque layer;
in the magnetization-free layer, a magnetization direction is randomly aligned up or down based on the adjusted torque ratio; and
the spin-orbit torque-based random number generator generates a random number based on current that is switched and output based on the randomly aligned magnetization direction.

8. The method according to claim 7, wherein, when a thickness of the second spin torque layer increases, the torque ratio increases as a magnitude of the damping-like torque decreases in a state where a magnitude of the field-like torque is maintained, and
when a thickness of the second spin torque layer decreases, the torque ratio decreases as a magnitude of the damping-like torque increases in a state where a magnitude of the field-like torque is maintained.

9. The method according to claim 7 or 8, wherein the forming of the spin torque generation layer comprises forming the first spin torque layer using any one of Ta, W, and Pt; and
forming the second spin torque layer using Nb.

10. The method according to claim 9, wherein the second spin torque layer is formed to have a thickness of 1 nm to 15 nm.

## Patentansprüche

1. Spin-Orbit-Drehmoment basierter Zufallszahlengenerator, umfassend:
eine Spin-Drehmoment-Erzeugungsschicht, die eine erste Spin-Drehmoment-Schicht und eine zweite Spin-Drehmoment-Schicht umfasst, eine frei magnetisierbare Schicht, eine Tunnelbarriere-Schicht und eine magnetisierungsfixierte Schicht,
wobei die zweite Spin-Drehmoment-Schicht zwischen der frei magnetisierbaren Schicht und der ersten Spin-Drehmoment-Schicht angeordnet ist und ein feldartiges Drehmoment (FLT) und ein dämpfungsartiges Drehmoment (DLT) erzeugt, die mit einer Magnetisierungsrichtung der frei magnetisierbaren Schicht zusammenhängen;
die erste Spin-Drehmoment-Schicht ein Drehmomentverhältnis entsprechend einer Größe des feldartigen Drehmoments zu einer Größe des dämpfungsartigen Drehmoments in Verbindung mit einer Dicke der zweiten Spin-Drehmoment-Schicht einstellt;
in der frei magnetisierbaren Schicht eine Magnetisierungsrichtung basierend auf dem eingestellten Drehmomentverhältnis zufällig nach oben oder unten ausgerichtet ist; und
eine Zufallszahl basierend auf einem Strom erzeugt wird, der basierend auf der zufällig ausgerichteten Magnetisierungsrichtung geschaltet und ausgegeben wird.

2. Spin-Orbit-Drehmoment basierter Zufallszahlengenerator gemäß Anspruch 1, wobei, wenn eine Dicke der zweiten Spin-Drehmoment-Schicht zunimmt, das Drehmomentverhältnis zunimmt, während die Größe des dämpfungsartigen Drehmoments in einem Zustand abnimmt, in dem die Größe des feldartigen Drehmoments aufrechterhalten ist, und
wenn die Dicke der zweiten Spin-Drehmoment-Schicht abnimmt, das Drehmomentverhältnis abnimmt, während die Größe des dämpfungsartigen Drehmoments in einem Zustand zunimmt, in dem die Größe des feldartigen Drehmoments aufrechterhalten ist.

3. Spin-Orbit-Drehmoment basierter Zufallszahlengenerator gemäß Anspruch 1 oder 2, wobei die erste Spin-Drehmoment-Schicht aus einem beliebigen der Elemente Ta, W und Pt gebildet ist und die zweite Spin-Drehmoment-Schicht aus Nb gebildet ist.

4. Spin-Orbit-Drehmoment basierter Zufallszahlengenerator gemäß Anspruch 3, wobei die zweite Spin-Drehmoment-Schicht mit einer Dicke von 1 nm bis 15 nm ausgebildet ist.

5. Spin-Orbit-Drehmoment basierter Zufallszahlengenerator gemäß einem der Ansprüche 1 bis 4, wobei basierend auf der ersten Spin-Drehmoment-Schicht und der zweiten Spin-Drehmoment-Schicht entsprechend dem Drehmomentverhältnis mit einem hohen Verhältnis des feldartigen Drehmoments zum dämpfungsartigen Drehmoment unter den Spin-Orbit-Drehmoment-Komponenten die Größe des die Magnetisierungsrichtung umschaltenden Schaltstroms abnimmt und die Schalteeffizienz beim Umschalten der Magnetisierungsrichtung erhöht wird.

6. Spin-Orbit-Drehmoment basierter Zufallszahlengenerator gemäß Anspruch 5, wobei eine Zufallszahlengenerierungsfunktion implementiert wird, wenn ein Entropiewert einer Zufallszahlenspalte für eine auf der Stromausgabe basierende Zufallszahl entsprechend dem Drehmomentverhältnis für wiederholt eingespeisten Strom höher ist als ein auf Zufälligkeit bezogener Referenzwert.

7. Verfahren zur Herstellung eines Spin-Orbit-Drehmoment basierten Zufallszahlengenerators, umfassend:
Bilden einer Spin-Drehmoment-Erzeugungsschicht, die eine erste Spin-Drehmoment-Schicht und eine zweite Spin-Drehmoment-Schicht umfasst;
Bilden einer frei magnetisierbaren Schicht auf der Spin-Drehmoment-Erzeugungsschicht;
Bilden einer Tunnelbarriere-Schicht auf der frei magnetisierbaren Schicht; und
Bilden einer magnetisierungsfixierten Schicht auf der Tunnelbarriere-Schicht, um einen auf Spin-Orbit-Drehmoment basierten Zufallszahlengenerator zu bilden,
wobei die zweite Spin-Drehmoment-Schicht zwischen der frei magnetisierbaren Schicht und der ersten Spin-Drehmoment-Schicht angeordnet ist und ein feldartiges Drehmoment (FLT) und ein dämpfungsartiges Drehmoment (DLT) erzeugt, die mit einer Magnetisierungsrichtung der frei magnetisierbaren Schicht zusammenhängen;
die erste Spin-Drehmoment-Schicht ein Drehmomentverhältnis entsprechend einer Größe des feldartigen Drehmoments zu einer Größe des dämpfungsartigen Drehmoments in Verbindung mit einer Dicke der zweiten Spin-Drehmoment-Schicht einstellt;
in der frei magnetisierbaren Schicht eine Magnetisierungsrichtung basierend auf dem eingestellten Drehmomentverhältnis zufällig nach oben oder unten ausgerichtet ist; und
der auf dem Spin-Orbit-Drehmoment basierte Zufallszahlengenerator eine Zufallszahl basierend auf einem Strom erzeugt, der basierend auf der zufällig ausgerichteten Magnetisierungsrichtung geschaltet und ausgegeben wird.

8. Verfahren gemäß Anspruch 7, wobei, wenn eine Dicke der zweiten Spin-Drehmoment-Schicht zunimmt, das Drehmomentverhältnis zunimmt, während die Größe des dämpfungsartigen Drehmoments in einem Zustand abnimmt, in dem die Größe des feldartigen Drehmoments aufrechterhalten ist, und
wenn eine Dicke der zweiten Spin-Drehmoment-Schicht abnimmt, das Drehmomentverhältnis abnimmt, während die Größe des dämpfungsartigen Drehmoments in einem Zustand zunimmt, in dem die Größe des feldartigen Drehmoments aufrechterhalten ist.

9. Verfahren gemäß Anspruch 7 oder 8, wobei das Ausbilden der Spin-Drehmoment-Erzeugungsschicht das Ausbilden der ersten Spin-Drehmoment-Schicht unter Verwendung von Ta, W oder Pt umfasst; und
das Ausbilden der zweiten Spin-Drehmoment-Schicht unter Verwendung von Nb.

10. Verfahren gemäß Anspruch 9, wobei die zweite Spin-Drehmoment-Schicht mit einer Dicke von 1 nm bis 15 nm ausgebildet wird.

## Revendications

1. Générateur de nombres aléatoires basé sur un couple spin-orbite, comprenant :
une couche de génération de couple de spin comprenant une première couche de couple de spin et une seconde couche de couple de spin, une couche exempte d'aimantation, une couche barrière tunnel, et une couche ancrée d'aimantation,
dans lequel la seconde couche de couple de spin est disposée entre la couche exempte d'aimantation et la première couche de couple de spin et génère un couple de type champ (FLT) et un couple de type amortissement (DLT) liés à une direction d'aimantation de la couche exempte d'aimantation ;
la première couche de couple de spin ajuste un rapport de couple selon une taille de couple de type champ à une taille de couple de type amortissement conjointement avec une épaisseur de la seconde couche de couple de spin ;
dans la couche exempte d'aimantation, une direction d'aimantation est alignée aléatoirement vers le haut ou vers le bas sur la base du rapport de couple ajusté ; et
un nombre aléatoire est généré sur la base d'un courant qui est commuté et délivré sur la base de la direction d'aimantation alignée aléatoirement.

2. Générateur de nombres aléatoires basé sur un couple spin-orbite selon la revendication 1, dans lequel, lorsqu'une épaisseur de la seconde couche de couple de spin augmente, le rapport de couple augmente lorsqu'une magnitude du couple de type amortissement diminue dans un état où une magnitude du couple de type champ est maintenue, et
lorsqu'une épaisseur de la seconde couche de couple de spin diminue, le rapport de couple diminue lorsqu'une magnitude du couple de type amortissement augmente dans un état où une magnitude du couple de type champ est maintenue.

3. Générateur de nombres aléatoires basé sur un couple spin-orbite selon la revendication 1 ou 2, dans lequel la première couche de couple de spin est formée de l'un quelconque parmi Ta, W et Pt, et la seconde couche de couple de spin est formée de Nb.

4. Générateur de nombres aléatoires basé sur un couple spin-orbite selon la revendication 3, dans lequel la seconde couche de couple de spin est formée pour avoir une épaisseur de 1 nm à 15 nm.

5. Générateur de nombres aléatoires basé sur un couple spin-orbite selon l'une des revendications 1 à 4, dans lequel, sur la base de la première couche de couple de spin et de la seconde couche de couple de spin, selon le rapport de couple avec un rapport élevé du couple de type champ au couple de type amortissement parmi des composantes de couple spin-orbite, une magnitude de commutation de courant commutant la direction d'aimantation diminue, et une efficacité de commutation de commutation de la direction d'aimantation est augmentée.

6. Générateur de nombres aléatoires basé sur un couple spin-orbite selon la revendication 5, dans lequel, lorsqu'une valeur d'entropie d'une colonne de nombres aléatoires pour un nombre aléatoire basé sur un courant délivré selon le rapport de couple pour un courant injecté de manière répétée est supérieure à une valeur de référence liée à un caractère aléatoire, une fonction de génération de nombres aléatoires est mise en oeuvre.

7. Procédé de fabrication d'un générateur de nombres aléatoires basé sur un couple spin-orbite, comprenant :
la formation d'une couche de génération de couple de spin comprenant une première couche de couple de spin et une seconde couche de couple de spin ;
la formation d'une couche exempte d'aimantation sur la couche de génération de couple de spin ;
la formation d'une couche barrière tunnel sur la couche exempte d'aimantation ; et
la formation d'une couche ancrée d'aimantation sur la couche barrière tunnel pour former un générateur de nombres aléatoires basé sur un couple spin-orbite,
dans lequel la seconde couche de couple de spin est disposée entre la couche exempte d'aimantation et la première couche de couple de spin et génère un couple de type champ (FLT) et un couple de type amortissement (DLT) liés à une direction d'aimantation de la couche exempte d'aimantation ;
la première couche de couple de spin ajuste un rapport de couple selon une taille de couple de type champ à une taille de couple de type amortissement conjointement avec une épaisseur de la seconde couche de couple de spin ;
dans la couche exempte d'aimantation, une direction d'aimantation est alignée aléatoirement vers le haut ou vers le bas sur la base du rapport de couple ajusté ; et
le générateur de nombres aléatoires basé sur un couple spin-orbite génère un nombre aléatoire sur la base d'un courant qui est commuté et délivré sur la base de la direction d'aimantation alignée aléatoirement.

8. Procédé selon la revendication 7, dans lequel, lorsqu'une épaisseur de la seconde couche de couple de spin augmente, le rapport de couple augmente lorsqu'une magnitude du couple de type amortissement diminue dans un état où une magnitude du couple de type champ est maintenue, et
lorsqu'une épaisseur de la seconde couche de couple de spin diminue, le rapport de couple diminue lorsqu'une magnitude du couple de type amortissement augmente dans un état où une magnitude du couple de type champ est maintenue.

9. Procédé selon la revendication 7 ou 8, dans lequel la formation de la couche de génération de couple de spin comprend la formation de la première couche de couple de spin en utilisant l'un quelconque parmi Ta, W et Pt ; et
la formation de la seconde couche de couple de spin en utilisant Nb.

10. Procédé selon la revendication 9, dans lequel la seconde couche de couple de spin est formée pour avoir une épaisseur de 1 nm à 15 nm.
